(19) Europäisches Patentamt / European Patent Office / Office européen des brevets

(11) **EP 3 835 738 B1**

(12) **EUROPEAN PATENT SPECIFICATION**

(45) Date of publication and mention
of the grant of the patent:
**29.11.2023 Bulletin 2023/48**

(21) Application number: **19215230.4**

(22) Date of filing: **11.12.2019**

(51) International Patent Classification (IPC):
**G01J 3/02** *(2006.01)* **G01J 3/453** *(2006.01)*

(52) Cooperative Patent Classification (CPC):
**G01J 3/0256; G01J 3/0259; G01J 3/4531;
G01J 3/4532**

(54) **FOURIER-TRANSFORM OPTICAL SPECTROMETER**

OPTISCHES SPEKTROMETER ZUR FOURIER-TRANSFORMATION

SPECTROMÈTRE OPTIQUE À TRANSFORMÉE DE FOURIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.06.2021 Bulletin 2021/24**

(73) Proprietors:
• **Imec VZW**
**3001 Leuven (BE)**
• **Royal Melbourne Institute of Technology
Melbourne, Victoria 3000 (AU)**
• **Universiteit Gent
9000 Gent (BE)**

(72) Inventors:
• **RYCKEBOER, Eva**
**3001 Leuven (BE)**

• **BAETS, Roeland**
**3001 Leuven (BE)**
• **NIE, Xiaomin**
**3001 Leuven (BE)**
• **ROELKENS, Gunther**
**3001 Leuven (BE)**
• **MITCHELL, Arnan**
**3001 Leuven (BE)**

(74) Representative: **AWA Sweden AB
Box 5117
200 71 Malmö (SE)**

(56) References cited:
**EP-A1- 3 182 078**

## Description

Technical field

The present inventive concept relates to a Fourier-transform optical spectrometer, in particular to a Fourier-transform optical spectrometer that can be integrated into a planar substrate.

Background

Fourier-transform optical spectrometers (FTS) are known in the prior art. They are used for a wide range of applications such as material characterization, food quality control and astronomy. Moreover, optical spectrometers can be used, for example as an interrogator of different sensor types such as a refractive index sensor, temperature sensor, absorption sensor or Raman spectroscopy sensor.

Fourier-transform infrared spectrometers (FTIR), are widely used to study the interaction between light and molecules.

Miniaturization of optical spectrometers is a widely researched topic as it makes the devices more applicable. Miniaturized spectrometers can be used outside a lab environment, e.g. in agriculture where there is a need to measure crops as they grow with a portable device, into which the optical spectrometer may be integrated. This type of spectrometer can be incorporated into smartphones, smartwatches and fits into textiles, drones and satellites or can even be implanted in the human body.

Thus, for various applications (mostly sensing-related), there is the need for miniature and portable FTS devices to allow e.g. for measurements in the field, or for many measurements in parallel. Also, broadband operation and high resolution are important.

A Fourier-transform spectrometer using two parallel waveguides is disclosed in documents WO2013162528 and EP3182078.

Summary

An objective of the present inventive concept is to provide a miniature and portable Fourier-transform optical spectrometer that still is simple to manufacture.

To this end, there is provided a Fourier-transform optical spectrometer, comprising: a planar slab; a first optical waveguide; a second optical waveguide. The first optical waveguide and the second optical waveguide each is in the form of a local modification of the planar slab and are laterally disposed at the slab parallel to each other. The Fourier-transform optical spectrometer further comprises an optical detector system connected to an unmodified section of the slab and segmented and extending in parallel to the first optical waveguide and the second optical waveguide. The first optical waveguide has a propagation mode with a first effective refractive index; the second optical waveguide has a propagation mode with a second effective refractive index different from the first effective refractive index; and the unmodified section of the slab has a propagation mode with a third effective refractive index larger than each of said first effective refractive index and said second effective refractive index, allowing lateral leakage of light from the first optical waveguide and the second optical waveguide into the said propagation mode of the unmodified section of the slab, so that an interferogram may be produced in the unmodified section of the slab and be detectable by the optical detector system.

Through allowing lateral leakage of light from the first optical waveguide and the second optical waveguide into the propagation mode of the unmodified section of the slab, to which the optical detector system may be coupled, generation of the interferogram is decoupled from detection of the same. Compared to known solutions, this substantially reduces dependence on the exact alignment of the optical detector system. For example, the optical detector system does not need to be precisely aligned to a narrow grating structure. The setup thus being more misalignment tolerant allows for simpler manufacturing and higher manufacturing flexibility. Further, this allows the optical detector system to more easily be integrated into the Fourier-transform optical spectrometer.

Further, the decoupling of generation and detection of the interferogram allows for the implementation of a lot of different optical detector systems, resulting in design flexibility.

The Fourier-transform optical spectrometer may be a Fourier-transform infrared spectrometer (FTIR).

The Fourier-transform optical spectrometer may be integrated onto a planar substrate, such as a chip.

The optical detector system may comprise an array of photodiodes. This allows the optical detector system to form an integral part of the Fourier-transform optical spectrometer, making the spectrometer simpler and cheaper to manufacture.

A photodiode of the array of photodiodes may be a germanium, Ge, photodiode. This is a cheap type of photodiode that still provides adequate performance.

The propagation mode of the first optical waveguide and the propagation mode of said second optical waveguide may each be a transverse magnetic (TM) mode. This is a typical case when using a silicon-in-insulator (SOI) platform.

The propagation mode of said first optical waveguide and said propagation mode of said second optical waveguide may each be a transverse electric (TE) mode. This may be a typical case when using a silicon nitride (SiN) platform.

The propagation mode of the unmodified section of the slab may be a transverse electric, TE, mode.

The first waveguide, the second waveguide, and the slab may be made from silicon, Si. This may be a typical case when using a silicon-in-insulator (SOI) platform.

Alternatively, the first waveguide, the second waveguide, and the slab may be made from silicon nitride, SiN.

The slab may comprise a plurality of narrowing tapers, each narrowing taper at an end being coupled to an optical detector, a plurality of optical detectors comprised by said optical detector system.

Alternatively, the slab may comprise an integrated slanted mirror directing light from the slab to the optical detector system, wherein the optical detector system is external to the slab.

Alternatively again, the slab may comprise a slanted taper, for coupling of light to the optical detector system.

The spectrometer may further comprise a polarization control system located upstream of the first waveguide and the second waveguide.

The spectrometer may further comprise a splitter configured to split incoming light into the first waveguide and the second waveguide.

The spectrometer may further comprise a propagation delay device downstream of the splitter and upstream of either of the first waveguide and the second waveguide.

Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.

Fig. 1 shows a first Fourier-transform optical spectrometer and a second Fourier-transform optical spectrometer.
Fig. 2 illustrates a principle of operation of the Fourier-transform optical spectrometers.
Fig. 3 shows a Fourier-transform optical spectrometer comprising a plurality of narrowing tapers each coupled to an optical detector.
Fig. 4 shows Fourier-transform optical spectrometers each comprising an integrated slanted mirror.
Fig. 5 shows Fourier-transform optical spectrometers where the optical detector is coupled using a slanted taper.

Detailed description

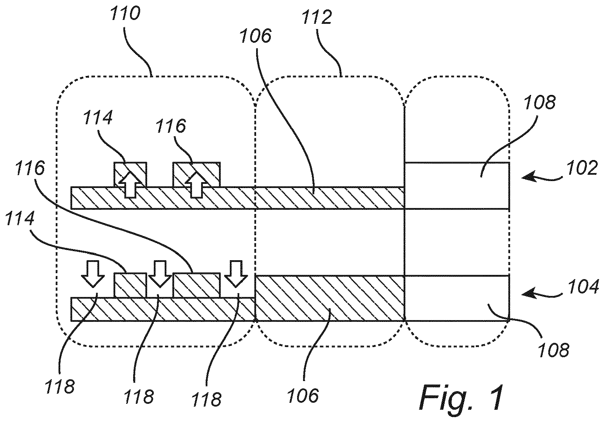

Fig. 1 shows a first Fourier-transform optical spectrometer 102 and a second Fourier-transform optical spectrometer 104, which each may be integrated onto a planar substrate, such as a chip.

Each of the first Fourier-transform optical spectrometer 102 and the second Fourier-transform optical spectrometer 104 comprises a planar slab 106 connected to an optical detector system 108.

Each planar slab 106 comprises a respective modified section 110. Each modified section 110 comprises a first waveguide 114 and a second waveguide 116, each formed as a local modification of the planar slab 106 and laterally disposed and parallel to each other, extending longitudinally in a direction normal to the cross-sectional plane of Fig. 1.

The optical detector system thus extends in parallel to the first waveguide 114 and the second waveguide 116.

In the case of the first Fourier-transform optical spectrometer 102, the first waveguide 114 and the second waveguide 116 are formed as respective rise-ups 114, 116 from a relatively thin slab 106, using manufacturing methods known per se, with the slab 106 being unmodified immediately adjacent, on both sides, to each of the first waveguide 114 and the second waveguide 116.

In the case of the second Fourier-transform optical spectrometer 104, the first waveguide 114 and the second waveguide 116 are remaining after etch-downs 118, using manufacturing methods known per se, in a relatively thick slab 106.

As shown, each planar slab 106 further comprises an unmodified section 112, each Fourier-transform spectrometer thus comprising the modified section 110 of the planar slab 106, the unmodified section 112 of the planar slab 106, and the optical detector system 108, with the optical detector system 108 connected the unmodified section 112 of the slab.

In the case of the second Fourier-transform optical spectrometer 104, the unmodified section 112 may have the same height as the first waveguide 114 and the second waveguide 116.

Through their respective geometries, in particular their respective heights and widths, the first optical waveguide 114 may be formed to have a propagation mode with a first effective refractive index $n_1$ and the second optical waveguide 116 may be formed to have a propagation mode with a second effective refractive index $n_2$ different from the first effective refractive index, and with the unmodified section 112 of the slab 106 having a propagation mode with a third effective refractive $n_3$ index larger than each of the first effective refractive index $n_1$ and the second effective refractive index $n_2$, as will be exemplified below.

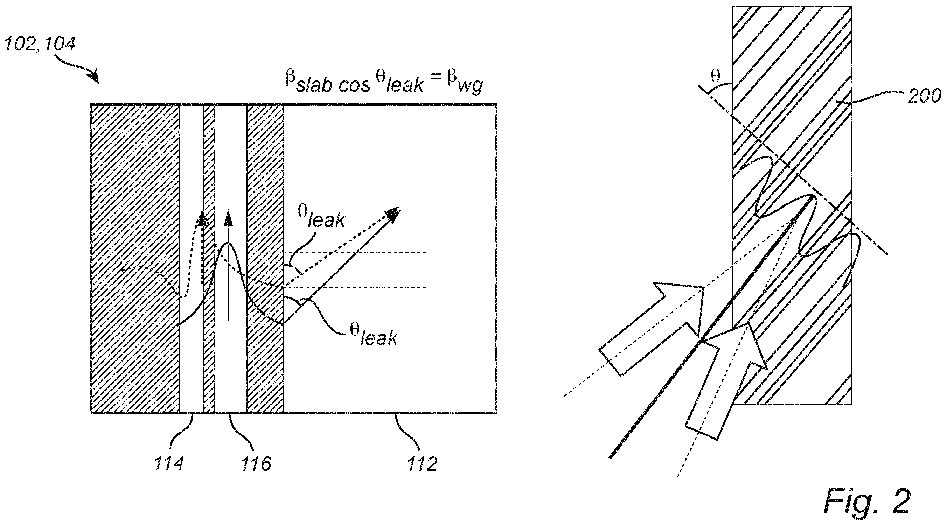

Fig. 2 shows the principle of operation of the Fourier-transform optical spectrometers 102, 104. An optical signal being measured is propagated in the first waveguide 114 and the second waveguide 116, having different respective propagation modes with different effective refractive indices $n_1$ and $n_2$, as described above, and thereby different propagation speeds.

Lateral leakage from the first waveguide 114 and the second 116 waveguide into the unmodified section 112 of the slab is possible by the effective refractive index n$_3$ being larger than each of $n_1$ and $n_2$, as can be understood by the following.

Let $\beta_{wg}$ denote the propagation constant of the propagation mode of either the first optical waveguide 114 or the second optical waveguide 116 and $\beta_{slab}$ denote the propagation constant for the propagation mode in the unmodified section 112 of the slab 106. If $\beta_{slab} > \beta_{wg}$, it is possible to find an angle $\theta_{leak}$ so that $\beta_{slab} \cos \theta_{leak} = \beta_{wg}$. This leads to phase matching of the respective propagation modes, allowing for lateral leakage. As a propagation constant $\beta$ for a propagation mode is related to the effective refractive index n as $\beta = (2\pi n)/\lambda$, wherein $\lambda$ is the wavelength, it can be seen that a condition for allowing lateral leakage becomes that the propagation mode of the unmodified section of the slab should have a larger effective refractive index than the effective refractive indices of each of the first waveguide 114 and the second waveguide 116.

Thus, through lateral leakage of light into the unmodified section 112 of the slab 106 (cf. Fig. 1), from each of the first waveguide 114 and the second waveguide 116, the optical signals propagating in each of the first waveguide 114 and the second waveguide 116 may interfere with each other.

This creates an interference beating pattern 200 that is a Fourier transform of the spectral content of the optical signal, arising as light from both propagation modes leak into the unmodified section 112. This pattern is a stationary spatial interference pattern that can be detected with the light detector system 108 (cf. Fig. 1), for example with a photodiode array, as will be exemplified below. The interference pattern has fringes that have an angle $\theta$ compared to the propagation direction of the first waveguide 114 and the second waveguide 116.

The angle $\theta$ at which the interference pattern appears relates to the respective effective refractive indices $n_1$ and $n_2$ of, respectively, the first 114 and the second waveguide 116, and that of the propagation mode in the slab $n_3$ as:

$$\theta(rad) = \frac{\pi}{2} - \frac{\cos^{-1}\left(\frac{n_1}{n_3}\right) + \cos^{-1}\left(\frac{n_2}{n_3}\right)}{2}.$$

The spatial period of this beating pattern for a given wavelength $\lambda$ along the first optical waveguide 114 and the second optical waveguide 116 is

$$\Delta x = \frac{\lambda}{|n_2 - n_1|}.$$

This is an improvement over standing wave Fourier-transform spectrometers in which the interference period is A12n, compared to which the interference period for a given wavelength of $\lambda/|n_1 - n_2|$ will be much

larger. This way, subsampling of the interference pattern when using commercially available photodiode arrays can be avoided. Whereas a single FTS has an optical frequency range limited to c/(2*n*pixel pitch), with *c* the speed of light in vacuum, the Fourier-transform spectrometer according to the present disclosure in principle only has a minimum optical wavelength that can be unambiguously detected, calculated as pixel pitch multiplied by 2|$n_2$ - $n_1$|.

The second Fourier-transform spectrometer 104 (cf. Figs 1 and 2) may operate through lateral leakage from a bimodal waveguide, as will be explained and exemplified in the following.

The first waveguide 114 and the second waveguide 116 of the second Fourier-transform spectrometer 104 may together form a bi-modal waveguide that has two co-propagating modes with different effective refractive indices $n_1$, corresponding to the first waveguide 114, and $n_2$, corresponding to the second waveguide 116, but which may have the same TE polarization, i.e., the propagation mode of the first optical waveguide and the propagation mode of said second optical waveguide each being a TE mode.

The bimodal waveguide may thus consist of two closely spaced shallowly etched waveguides 114, 116. As explained above, on each side of each of the waveguides 114, 116, sections of etched-down thin-slab waveguide 118 are present. Next to a thin slab 118 waveguide, a high slab waveguide of the same height as the waveguides 118 is present in form of the unmodified section 112.

Light from the bimodal waveguide 114, 116 may leak to this high slab region, in the form of the unmodified section 112, with a leakage factor that may be designed through the materials and geometries of the waveguides 114, 116 and the etched-down sections 118. Thus, lateral leakage from TE modes of the bi-modal waveguide may occur into a TE mode of the slab.

In other words, lateral leakage of light from the first waveguide 114 and the second waveguide 116 may be allowed into a propagation mode of the unmodified section 112 of slab, so that an interferogram may be produced in the unmodified section of said slab and be detectable by the optical detector system 108.

This configuration of the first Fourier-transform spectrometer 104 useful for implementation using material platforms that have a relatively small difference in effective refractive index between layers, for example a silicon nitride (SiN) platform, the first waveguide 114, the second waveguide 116, and the slab 106 thus being made from SiN.

There, generally, the respective effective refractive index of a respective TE propagation mode in each of the waveguides 114, 116 will be larger than that of a respective effective refractive index of a respective TM propagation mode in each of the waveguides 114, 116, in turn having a larger effective refractive index than the effective refractive index of a TE mode of the etch-downed sections 118 of the slab 106.

For example, with SiN waveguides 114, 116, which may be formed as ribs, each with a first height and unmodified section 112 of the slab 106 with a second, lower, height, TE propagation modes in the unmodified section of the slab 112 may have effective refractive indices lower than that of the fundamental waveguide TM propagation mode, preventing lateral leakage. However, the unmodified section 112 of the slab 106 may be arranged with the first height so that a TE propagation mode in the unmodified section has a higher effective reflective index than those of the TM and TE propagation modes in the first waveguide 114 and the second waveguide 116, thus allowing lateral leakage of light from the first waveguide 114 and the second waveguide 116 into the TE propagation mode of the unmodified section 112 of the slab 106, so that an interferogram may be produced in the unmodified section of said slab and be detectable by the optical detector system. For example, the first height of the waveguides 114, 116 and of the unmodified section 112 may be 300 nm and the second height of the etched-downed sections may be 150 nm.

The first Fourier-transform spectrometer 102 (cf. Figs 1 and 2) may operate though lateral leakage from co-propagating rib waveguides, as will be explained and exemplified in the following.

The first waveguide 114 and the second waveguide 116 of the first Fourier-transform spectrometer 102 may form respective waveguides, each having the form of a rib, with respective TM propagation modes having respective refractive indices $n_1$ and $n_2$, which may leak into a TE propagation mode of the slab 106, where the slab 106 is located in the flanks of the rib waveguides 114, 116.

The interferogram may then be created by TM modes that leak from the rib waveguides 114, 116 and interfere lateral to the two parallel waveguides 114, 116.

Through adapting the widths of the first waveguide 114 and the second waveguide 116, the TM respective propagation modes of the first waveguide 114 and the second waveguide 116 may be phase matched to the TE propagation mode of the slab.

Such a leakage phenomenon may be achieved as described in: A. Hope, T.G. Nguyen, A. Mitchell, W. Bogaerts, Quantitative analysis of TM lateral leakage in foundry fabricated silicon rib waveguides, Photonics Technology Letters, 28(4), p.493-496 (2016) and in M. Koshiba, K. Kakihara, and in K. Saitoh, "Reduced lateral leakage losses of TM-like modes in silicon-on-insulator ridge waveguides," Optics Letters, vol. 33, pp. 2008-2010, 2008.

This configuration of the first Fourier-transform spectrometer 102 is useful for implementation using material platforms which have a large difference in effective refractive index between layers, for example a silicon-in-insulator (SOI) platform, the first waveguide 114, the second waveguide 116, and the slab 106 thus being made from silicon.

There, generally, it will be possible to design the waveguides 114, 116 and the unmodified section 112 of the slab 106 so that the respective effective refractive index of a respective TE propagation mode in each of the waveguides 114, 116 will be larger than the effective refractive index of a TE mode of the unmodified section 112 of the slab 106, in turn having a larger effective refractive index than that of a respective effective refractive index of a respective TM propagation mode in each of the waveguides 114, 116.

For example, in an SOI rib-waveguide with waveguide 114, 116 height of 220nm and a slab 106 height of 150 nm, the TE modes propagation modes in the slab 106 will have higher effective reflective indices than those of the fundamental TM propagation modes in the waveguides. This allows for lateral leakage of waveguide 114, 116 TM mode into the slab 106 TE mode.

For both Fourier-transfer spectrometers 102, 104, it may be preferable to use only one polarization to generate the interferogram, for achieving interference between the two TM modes, or the two TE modes in the two waveguides 114, 116, while avoiding interference between TE and TM modes in the same waveguides 114, 116.

Such polarization control may be external to the spectrometer 102, 104, such as a fiber squeezer or a free-space polarization beam splitter, as known per se. In these cases, the light injected into the spectrometer 102, 104 is already polarized.

Alternatively, use may be made of various on-chip polarization rotators as reported in the literature (e.g. Dai, Daoxin, and John E. Bowers. "Novel concept for ultracompact polarization splitter-rotator based on silicon nanowires." Optics express 19.11 (2011): 10940-10949), upstream of the first waveguide 114 and the second waveguide 116.

According to Fourier transform theory, in order to better reconstruct the spectrum (especially for broadband input signals), the recorded interferogram should contain a point with a zero optical path difference between the first waveguide 114 and the second waveguide 116, the light propagating in the first waveguide 114 and the second waveguide 116 thus having the same phase delay.

In order to create such an interferogram, the spectrometer 102, 104 may comprise an additional phase delay to the light that goes through one of the waveguides 114, 116. The additional phase delay may comprise an additional propagation length or a phase-delay device, both known per se.

The optical detector system 108 of the Fourier-transform interferometers 102 and 104 may have several different designs. This variety in detection methods offers flexibility in that read-out can be optimized for a given application.

Further, because the detection may occur far from the parallel waveguides, waveguide losses can be minimized, with no scattering losses due to closeness of scatterers. Further use of shallowly-etched waveguides may reduce exposure to sidewall roughness. This leads to a longer interferogram that can be detected for a given pixel pitch, hence higher spectral resolution.

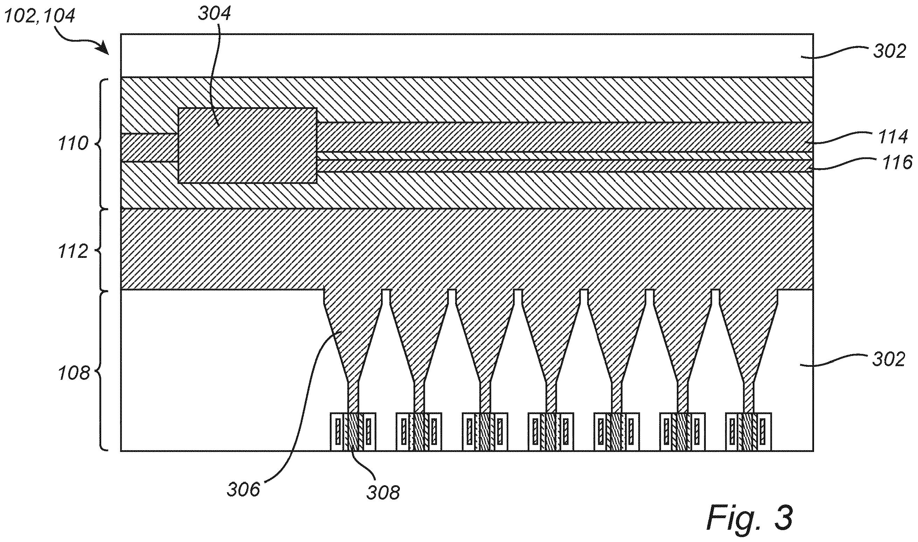

Fig. 3 shows a Fourier-transform optical spectrometer, which may be the first Fourier-transform optical spectrometer 102 or the second Fourier-transform optical spectrometer 104 of Fig. 1.

Visible are the first 114 and the second waveguide 116 of the modified section 110, and the unmodified section 112. The optical detector system 108 is coupled to the unmodified section 112.

A splitter arrangement 304, which may be located on-chip, may be located upstream of the first 114 and second 116 waveguides and may comprise a splitter configured to split incoming light into the first waveguide 114 and the second waveguide 116, preferably splitting light with equal intensity into the first waveguide 114 and the second waveguide 116.

Further, the splitter arrangement 304, may have an integrated phase-delay device, as described above, downstream of the splitter.

Further again, the splitter arrangement 304 may comprise an integrated polarization control, as described above, located upstream of the splitter.

The modified section 110, the unmodified section 112, and the optical readout system 108 may be placed on a substrate 302.

As an example, the optical readout system 108 comprises a plurality of narrowing tapers 306 coupled to the unmodified section 112 and having the same height as the unmodified section 112 and each coupled to an optical detector 308. Thus, the optical readout system comprises the plurality of optical detectors 308, where the optical detectors 308 segment the optical readout system 108 in a direction along, i.e., parallel to, the first 114 and second 116 waveguides.

Each optical detector 308 may be a photodiode, such as a germanium (Ge) photodiode. Alternatively, the photodiode may be a silicon (Si) photodiode or a III-V photodiode. Thus, the optical detector system may comprise an array of photodiodes.

Hereby, the interferogram may be sampled using inverted tapers 306 and detected with photodiodes 308 integrated into the Fourier-transform spectrometer 102, 104.

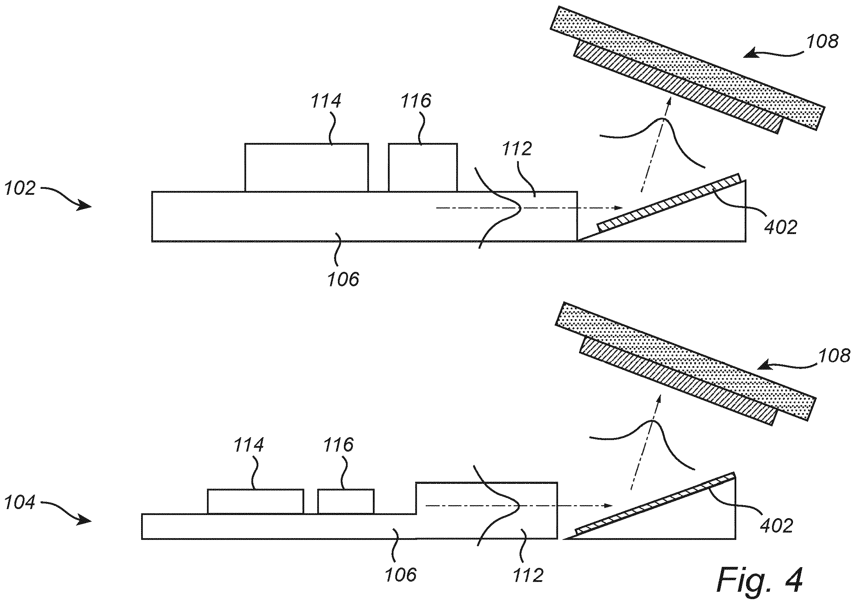

Fig. 4 shows Fourier-transform optical spectrometers 102, 104 each comprising an integrated slanted mirror 402 directing light from the unmodified section 112 of the slab 106 to respective optical detector systems 108, which are external to the slab 106. The mirror 402 may, for example, be a metal mirror. The optical detector system 108 may, for example, be segmented through an array of photodiodes, for example Ge photodiodes.

Thus, the mirror 402 may direct light coming out of the unmodified section 112 of the slab to, for example, an external photodiode array. The two modes that generate the interferogram are propagating in the slab mode, i.e., after a short propagation distance in the unmodified section 112 of the slab 106 the light is coupled out of the slab plane using the mirror 402.

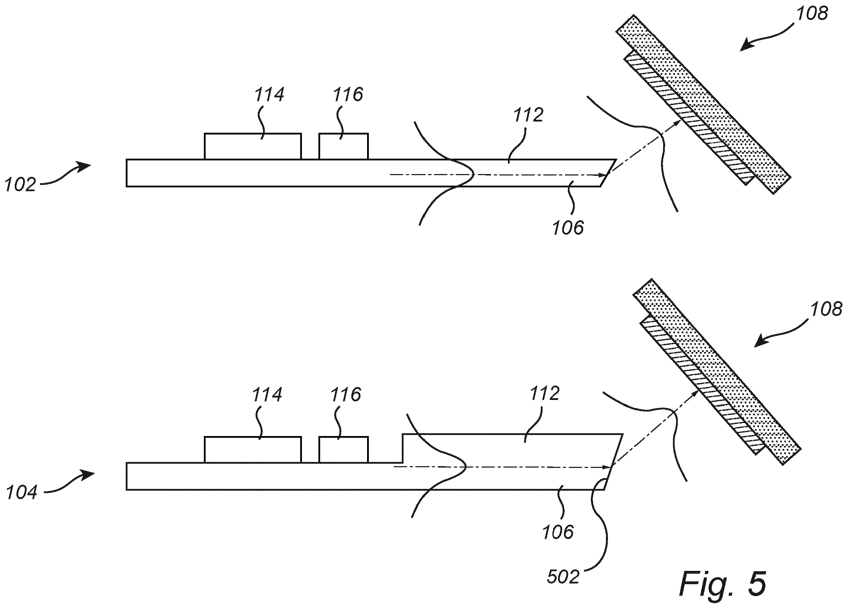

Fig. 5 shows Fourier-transform optical spectrometers 102, 104 where the optical detector is coupled using a vertically slanted taper 502 of the slab 106.

The vertically slanted taper 502 is located opposite to the unmodified section 112 of the slab 106, as compared to the first waveguide 114 and the second waveguide 116 directs light from the unmodified section 112 of the slab 106 to respective optical detector systems 108, which are external to the slab 106.

With the vertically slanted taper 502, light propagating in the slab 106 can slowly leak out vertically to the optical detector system 108. Thus, the vertically slanted taper 502 may direct light coming out of the unmodified section 112 of the slab to, for example, an external photodiode array, for example Ge photodiodes. This way the light is coupled vertically to the optical detector system 108.

In the above the inventive concept has mainly been described with reference to a limited number of examples. However, as is readily appreciated by a person skilled in the art, other examples than the ones disclosed above are equally possible within the scope of the inventive concept, as defined by the appended claims.

For example, alternative to what was described above, a series of scatterers, e.g., a grating, may be located in the unmodified section of the slab to diffract and interferogram upwards, to an optical detector system, for example through a substrate to a photodiode array.

## Claims

1. A Fourier-transform optical spectrometer (102, 104), comprising:

    a planar slab (106);
    a first optical waveguide (114);
    a second optical waveguide (116), wherein said first optical waveguide (114) and said second optical waveguide (115) each is in the form of a local modification of said slab (106) and are laterally disposed at said slab (106) parallel to each other; and
    an optical detector system (108) connected to an unmodified section (112) of said slab (106) and segmented and extending in parallel to said first optical waveguide (114) and said second optical waveguide (116),

    wherein:

    said first optical waveguide (114) has a propagation mode with a first effective refractive index;
    said second optical waveguide (116) has a propagation mode with a second effective refractive index different from said first effective refractive index; and

said unmodified section (112) of said slab has a propagation mode with a third effective refractive index larger than each of said first effective refractive index and said second effective refractive index, allowing lateral leakage of light from said first optical waveguide (114) and said second optical waveguide (116) into said propagation mode of said unmodified section (112) of said slab (106), so that an interferogram (200) may be produced in said unmodified section (112) of said slab (106) and be detectable by said optical detector system (108).

2. The spectrometer (102, 104) according to claim 1, wherein said optical detector system comprises an array of photodiodes.

3. The spectrometer (102, 104) according to claim 2, wherein a photodiode of said array of photodiodes is a germanium, Ge, photodiode.

4. The spectrometer (102, 104) according to any one of claims 1-3, wherein said propagation mode of said first optical waveguide and said propagation mode of said second optical waveguide each is a transverse magnetic, TM, mode.

5. The spectrometer (102, 104) according to any one of claims 1-3, wherein said propagation mode of said first optical waveguide and said propagation mode of said second optical waveguide each is a transverse electric, TE, mode.

6. The spectrometer (102, 104) according to any one of claims 1-5, wherein said propagation mode of said unmodified section of said slab is a transverse electric, TE, mode.

7. The spectrometer (102, 104) according to any one of claims 1-6, wherein said first waveguide, said second waveguide, and said slab are made from silicon, Si.

8. The spectrometer (102, 104) according to any one of claims 1-7, wherein said first waveguide, said second waveguide, and said slab are made from silicon nitride, SiN.

9. The spectrometer (102, 104) according to any one of claims 1-8, wherein said slab comprises a plurality of narrowing tapers, each said narrowing taper at an end being coupled to an optical detector, a plurality of optical detectors comprised by said optical detector system.

10. The spectrometer (102, 104) according to any one of claims 1-8, wherein said slab comprises an integrated slanted mirror directing light from said slab to said optical detector system, wherein said optical detector system is external to said slab.

11. The spectrometer (102, 104) according to any one of claims 1-10, further comprising a polarization control system located upstream of said first waveguide and said second waveguide.

12. The spectrometer (102, 104) according to any one of claims 1-11, further comprising a splitter configured to split incoming light into said first waveguide and said second waveguide.

13. The spectrometer (102, 104) according to claim 12, further comprising a propagation delay device downstream of said splitter and upstream of either of said first waveguide and said second waveguide.

**Patentansprüche**

1. Optisches Spektrometer zur Fourier-Transformation (102, 104), umfassend:

   eine planare Platte (106);
   einen ersten Lichtwellenleiter (114);
   einen zweiten Lichtwellenleiter (116), wobei der erste Lichtwellenleiter (114) und der zweite Lichtwellenleiter (115) jeweils in Form einer lokalen Änderung der Platte (106) vorliegen und seitlich an der Platte (106) parallel zueinander angeordnet sind; und
   ein optisches Detektionssystem (108), das mit einem unveränderten Abschnitt (112) der Platte (106) verbunden ist und segmentiert ist und sich parallel zu dem ersten Lichtwellenleiter (114) und dem zweiten Lichtwellenleiter (116) erstreckt,
   wobei:

      der erste Lichtwellenleiter (114) einen Ausbreitungsmodus mit einem ersten effektiven Brechungsindex aufweist;
      der zweite Lichtwellenleiter (116) einen Ausbreitungsmodus mit einem zweiten effektiven Brechungsindex, der anders als der erste effektive Brechungsindex ist, aufweist; und
      der unveränderte Abschnitt (112) der Platte einen Ausbreitungsmodus mit einem dritten effektiven Brechungsindex aufweist, der größer als jeder von dem ersten effektiven Brechungsindex und dem zweiten effektiven Brechungsindex ist, wodurch ein seitliches Entweichen von Licht aus dem ersten Lichtwellenleiter (114) und dem zweiten Lichtwellenleiter (116) in den Ausbreitungsmodus des unveränderten Abschnitts (112) der Platte (106) ermöglicht wird, so dass ein Interferogramm (200) in dem unveränderten Abschnitt (112) der Platte (106) erzeugt werden kann und durch das optische Detektionssystem (108) detektierbar ist.

2. Spektrometer (102, 104) nach Anspruch 1, wobei das optische Detektionssystem ein Photodioden-Array umfasst.

3. Spektrometer (102, 104) nach Anspruch 2, wobei eine Photodiode des Photodioden-Arrays eine Germanium-, Ge, Photodiode ist.

4. Spektrometer (102, 104) nach einem der Ansprüche 1 bis 3, wobei der Ausbreitungsmodus des ersten Lichtwellenleiters und der Ausbreitungsmodus des zweiten Lichtwellenleiters jeweils ein transversalmagnetischer, TM, Modus ist.

5. Spektrometer (102, 104) nach einem der Ansprüche 1 bis 3, wobei der Ausbreitungsmodus des ersten Lichtwellenleiters und der Ausbreitungsmodus des zweiten Lichtwellenleiters jeweils ein transversalelektrischer, TE, Modus ist.

6. Spektrometer (102, 104) nach einem der Ansprüche 1 bis 5, wobei der Ausbreitungsmodus des unveränderten Abschnitts der Platte ein transversal-elektrischer, TE, Modus ist.

7. Spektrometer (102, 104) nach einem der Ansprüche 1 bis 6, wobei der erste Wellenleiter, der zweite Wellenleiter und die Platte aus Silizium, Si, hergestellt sind.

8. Spektrometer (102, 104) nach einem der Ansprüche 1 bis 7, wobei der erste Wellenleiter, der zweite Wellenleiter und die Platte aus Siliziumnitrid, SiN, hergestellt sind.

9. Spektrometer (102, 104) nach einem der Ansprüche 1 bis 8, wobei die Platte eine Vielzahl von sich verengenden Verjüngungen umfasst, wobei jede sich verengende Verjüngung an einem Ende mit einem optischen Detektor gekoppelt ist, wobei eine Vielzahl von optischen Detektoren in dem optischen Detektionssystem enthalten ist

10. Spektrometer (102, 104) nach einem der Ansprüche 1 bis 8, wobei die Platte einen integrierten schrägen Spiegel umfasst, der Licht von der Platte zu dem optischen Detektionssystem leitet, wobei das optische Detektionssystem außerhalb der Platte liegt.

11. Spektrometer (102, 104) nach einem der Ansprüche 1 bis 10, ferner umfassend ein Polarisationssteuersystem, das sich stromaufwärts von dem ersten Wellenleiter und dem zweiten Wellenleiter befindet.

12. Spektrometer (102, 104) nach einem der Ansprüche 1 bis 11, ferner umfassend einen Teiler, der dazu konfiguriert ist, ankommendes Licht in den ersten Wellenleiter und den zweiten Wellenleiter zu teilen.

13. Spektrometer (102, 104) nach Anspruch 12, ferner umfassend eine Ausbreitungsverzögerungsvorrichtung stromabwärts von dem Teiler und stromaufwärts von entweder dem ersten Wellenleiter oder dem zweiten Wellenleiter.

**Revendications**

1. Spectromètre optique à transformée de Fourier (102, 104), comprenant :

une dalle plane (106) ;
un premier guide d'onde optique (114) ;
un deuxième guide d'onde optique (116), dans lequel ledit premier guide d'onde optique (114) et ledit deuxième guide d'onde optique (115) se présentent chacun sous la forme d'une modification locale de ladite dalle (106) et sont disposés latéralement au niveau de ladite dalle (106) parallèlement l'un à l'autre; et
un système de détection optique (108) connecté à une section non modifiée (112) de ladite dalle (106) et segmentée et s'étendant parallèlement audit premier guide d'onde optique (114) et audit deuxième guide d'onde optique (116), dans lequel :

ledit premier guide d'onde optique (114) a un mode de propagation avec un premier indice de réfraction effectif ;
ledit deuxième guide d'onde optique (116) a un mode de propagation avec un deuxième indice de réfraction effectif différent dudit premier indice de réfraction effectif ; et
ladite section non modifiée (112) de ladite dalle a un mode de propagation avec un troisième indice de réfraction effectif supérieur à chacun desdits premier indice de réfraction effectif et deuxième indice de réfraction effectif, ce qui permet une fuite latérale de lumière dudit premier guide d'onde optique (114) et dudit deuxième guide d'onde optique (116) dans ledit mode de propagation de ladite section non modifiée (112) de ladite dalle (106), de sorte qu'un interférogramme (200) puisse être produit dans ladite section non modifiée (112) de ladite dalle (106) et être détectable par ledit système de détection optique (108).

**2.** Spectromètre (102, 104) selon la revendication 1, dans lequel ledit système de détection optique comprend un réseau de photodiodes.

**3.** Spectromètre (102, 104) selon la revendication 2, dans lequel une photodiode dudit réseau de photodiodes est une photodiode au germanium, Ge.

**4.** Spectromètre (102, 104) selon une quelconque des revendications 1 à 3, dans lequel ledit mode de propagation dudit premier guide d'onde optique et ledit mode de propagation dudit deuxième guide d'onde optique est chacun un mode magnétique transversal, TM.

**5.** Spectromètre (102, 104) selon une quelconque des revendications 1 à 3, dans lequel ledit mode de propagation dudit premier guide d'onde optique et ledit mode de propagation dudit deuxième guide d'onde optique sont chacun un mode électrique transversal, TE.

**6.** Spectromètre (102, 104) selon une quelconque des revendications 1 à 5, dans lequel ledit mode de propagation de ladite section non modifiée de ladite dalle est un mode électrique transversal, TE.

**7.** Spectromètre (102, 104) selon une quelconque des revendications 1 à 6, dans lequel ledit premier guide d'onde, ledit deuxième guide d'onde et ladite plaque sont fabriqués à partir de silicium, Si.

**8.** Spectromètre (102, 104) selon une quelconque des revendications 1 à 7, dans lequel ledit premier guide d'onde, ledit deuxième guide d'onde et ladite dalle sont fabriqués à partir de nitrure de silicium, SiN.

**9.** Spectromètre (102, 104) selon une quelconque des revendications 1 à 8, dans lequel ladite dalle comprend une pluralité de cônes de rétrécissement, chacun desdits cônes de rétrécissement étant couplé à une extrémité à un détecteur optique, une pluralité de détecteurs optiques étant constitués par ledit système de détecteur optique.

**10.** Spectromètre (102, 104) selon une quelconque des revendications 1 à 8, dans lequel ladite dalle comprend un miroir incliné intégré dirigeant la lumière depuis ladite dalle vers ledit système de détection optique, dans lequel ledit système de détection optique est externe à ladite dalle.

**11.** Spectromètre (102, 104) selon une quelconque des revendications 1 à 10, comprenant en outre un système de contrôle de polarisation situé en amont dudit premier guide d'onde et dudit deuxième guide d'onde.

**12.** Spectromètre (102, 104) selon une quelconque des revendications 1 à 11, comprenant en outre un séparateur configuré pour diviser la lumière entrante en ledit premier guide d'ondes et ledit deuxième guide d'ondes.

**13.** Spectromètre (102, 104) selon la revendication 12, comprenant en outre un dispositif de retard de propagation en aval dudit séparateur et en amont de l'un ou l'autre dudit premier guide d'onde et dudit deuxième guide d'onde.

*Fig. 1*

102,104

$$\beta_{slab} \cos \theta_{leak} = \beta_{wg}$$

$\theta_{leak}$

$\theta_{leak}$

114    116    112

200

$\theta$

Fig. 2

EP 3 835 738 B1

Fig. 3

Fig. 4

EP 3 835 738 B1

Fig. 5

108
112
106
502
116
114
102
104

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013162528 A
- EP 3182078 A

**Non-patent literature cited in the description**

- **A. HOPE ; T.G. NGUYEN ; A. MITCHELL ; W. BOGAERTS.** Quantitative analysis of TM lateral leakage in foundry fabricated silicon rib waveguides. *Photonics Technology Letters,* 2016, vol. 28 (4), 493-496
- **M. KOSHIBA ; K. KAKIHARA ; K. SAITOH.** Reduced lateral leakage losses of TM-like modes in silicon-on-insulator ridge waveguides. *Optics Letters,* 2008, vol. 33, 2008-2010
- **DAI, DAOXIN ; JOHN E. BOWERS.** Novel concept for ultracompact polarization splitter-rotator based on silicon nanowires. *Optics express,* 2011, vol. 19.11, 10940-10949